Europäisches Patentamt

European Patent Office

Office européen des brevets

(19)

(11) Veröffentlichungsnummer : **0 130 296**
**B1**

(12) **EUROPÄISCHE PATENTSCHRIFT**

(45) Veröffentlichungstag der Patentschrift :
01.10.86

(51) Int. Cl.⁴ : **C 09 D   3/74, C 08 L 27/06**

(21) Anmeldenummer : 84104184.1

(22) Anmeldetag : 13.04.84

(54) **Beschichtungsmassen aus Plastisolen oder Organosolen und Verfahren zur Verbesserung der Haftung dieser Massen auf metallischen Untergründen.**

(30) Priorität : 01.06.83 DE 3319849

(43) Veröffentlichungstag der Anmeldung :
09.01.85 Patentblatt 85/02

(45) Bekanntmachung des Hinweises auf die Patenterteilung : 01.10.86 Patentblatt 86/40

(84) Benannte Vertragsstaaten :
BE DE FR GB IT NL SE

(56) Entgegenhaltungen :
DE-A- 3 113 692

(73) Patentinhaber : Degussa Aktiengesellschaft
Weissfrauenstrasse 9
D-6000 Frankfurt am Main 1 (DE)

(72) Erfinder : Bühler, Harald
Wolfgangstrasse 1
D-6450 Hanau 9 (DE)
Erfinder : Statt, Bernhard
Wildaustrasse 23
D-6450 Hanau 9 (DE)

EP 0 130 296 B1

## Beschreibung

Die Erfindung betrifft Beschichtungsmassen aus Plastisolen und Organosolen, die als Haftvermittler ein Polyaminoamid enthalten, und ein Verfahren zur Verbesserung der Haftung dieser Massen auf metallischen Untergründen. Plastisole sind flüssige Dispersionen von Kunststoffen, insbesondere PVC, in Weichmachern, die zusätzlich Füllstoffe, Farb-Pigmente und Stabilisatoren enthalten können.

Plastisole und Organosole werden vielfach im Fahrzeugbau eingesetzt, z. B. als Unterbodenschutzmassen, Nahtabdichtungen oder Antidröhnmassen. Als Einsatzgebiete sind weiter z. B. die Beschichtung von Rohren, Geflechten und Werkzeugen aus Metall, aber auch Textilbeschichtungen zu nennen. Die Applikation erfolgt nach dem Streich-, Spritz-, Tauch-, Guß- oder Druckverfahren.

Herkömmliche PVC-Plastisole benötigen nach dem Auftragen auf den Untergrund in der Regel Geliertemperaturen von 170-190 °C.

Der Trend führt aber u. a. aus Gründen der Energieeinsparung immer mehr zu Plastisoltypen, die schon bei ca. 140 °C eine ausreichende Gelierung gewährleisten.

Von großer anwendungstechnischer Bedeutung ist das Haftvermögen der Plastisole und Organosole auf dem Untergrund. Insbesondere PVC-Plastisole und Organosole ohne spezielle Zusätze bereiteten wegen ihrer schlechten Haftung auf den metallischen Untergründen Probleme. Es ist daher üblich, haftverbessernde polymerisierende Verbindungen wie z. B. Trimethylolpropantrimethacrylat einzusetzen.

Damit muß aber gleichzeitig als Nachteil in Kauf genommen werden, daß ein bestimmtes Temperaturniveau nicht unterschritten werden darf, da ansonsten die Polymerisationsreaktion der Haftvermittler nicht anspringt.

Neuerdings werden auch Polyaminoamide verwendet, die auch bei niedrigeren Temperaturen wirksam sind. Trotzdem zeigen die bei diesen Temperaturen verarbeiteten Plastisole auf den verschiedenen metallischen Untergründen eine nur unbefriedigende Haftung.

Aufgabe der Erfindung ist eine Beschichtungsmasse aus Plastisol oder Organosolen, die auch bei niedrigen Temperaturen ein ausreichendes Haftvermögen auf metallischen Untergründen besitzt.

Gegenstand der Erfindung sind Beschichtungsmassen aus Plastisolen oder Organosolen, enthaltend ein Polyaminoamid, die dadurch gekennzeichnet sind, daß sie 0,2-5 Gew.-% einer hydrophoben Kieselsäure enthalten. Geeignet sind Plastisole und Organosole, die als Kunststoff einzeln oder im Gemisch enthalten : überwiegend PVC und dessen Copolymerisate.

Ein weiterer Gegenstand der Erfindung ist ein Verfahren zur Verbesserung der Haftung dieser Massen auf metallischen Untergründen.

Bevorzugt eingesetzt werden Polymerisate des Vinylchlorids, die bei Temperaturen von 100 bis 200 °C, insbesondere von 140 bis 180 °C, gelieren.

Sowohl Suspensions- als auch Emulsionspolymerisate des Vinylchlorids und für die Copolymerisation geeignete Monomere wie z. B. Vinylacetat können verwendet werden. Beispiele für derartige Plastisole sind die Solvic®-Typen der Serie 300 (Solvay GmbH) oder die Vinnol®-Sorten der P 100-Reihe (Wacker). Als gebräuchliches Polyaminoamid ist Euretek® 505 zu nennen (Schering AG).

Zur Regulierung der rheologischen Eigenschaften der Plastisole ist es üblich, hochdisperse pyrogene Kieselsäuren einzusetzen. Hierfür werden die hydrophilen Typen wie z. B. AEROSIL® 200 verwendet, die auch das Ausschwimmverhalten der Pigmente günstig beeinflussen. Durch Zusatz pyrogener Kieselsäuren wird das Sedimentationsverhalten grobteiliger Füllstoffe, wie z. B. Schwerspat oder Kreide in Plastisolen und Organosolen günstig beeinflußt. Der erfindungsgemäße Zusatz von 0,2-5 Gew.-%, bevorzugt 0,5 bis 1,5 Gew.-%, einer hydrophoben Kieselsäure, bezogen auf die Plastisolmenge, führt dagegen zu einer deutlichen Verbesserung der Plastisolhaftung auf den metallischen Untergründen.

Die hydrophobe Kieselsäure wird mit den üblichen Geräten in das Plastisol eingemischt. Als hydrophobe Kieselsäuren sind alle nach dem Stand der Technik mit Organosilanverbindungen bzw. -polymeren hydrophobierten Kieselsäuren gefällten oder durch hochtemperaturhydrolytischen (pyrogenen) Ursprungs, einzeln oder im Gemisch, geeignet. Ihre mittlere Primärteilchengröße liegt zwischen 7 und 85 nm. Sie besitzen eine spezifische Oberfläche von 50 bis 700 $m^2/g$, bevorzugt von 100 bis 300 $m^2/g$. Besonders geeignet sind hydrophobierte pyrogene Kieselsäuren wie z. B. AEROSIL® R 972 oder R 974.

Als Untergründe werden vorzugsweise grundierte Eisenbleche verwendet. Es kommen sowohl die elektrophoretische als auch herkömmliche Einbrenngrundierungen in Frage.

Folgende Beispiele demonstrieren die Überlegenheit der erfindungsgemäßen Plastisole, die insbesondere als Unterbodenschutzmassen geeignet sind. Die Grundmischung der Beschichtungsmassen besteht aus

| | |
|---|---|
| 100 | Teile PVC (verpastbar) |
| 150 | Teile Weichmachergemisch |
| 91 | Teile Kreide |
| 7 | Teile aliphatisches Lösemittel |
| 2 | Teile Barium-Cadmium-Zink-Stabilisator |
| 3,5 | Teile CaO |
| 5 | Teile modifiziertes Polyaminoamid |

Die Grundmischung trägt die Bezeichnung Probe 1, die Probe 2 enthält zusätzlich 5,5 Teile (≙ 1,5 Gew.-%) Aerosil® 200 (hydrophile pyrogene Kieselsäure, BET-Oberfläche 200 $m^2/g$) die Probe 3 enthält zusätzlich 5,5 Teile Aerosil® R 972 (hydrophobe pyrogene Kieselsäure, BET-Oberfläche 130 m²/g).

Von den Pasten werden keilförmige Filme mit einem Dickenanstieg von 0-1 000 μm in einer Länge von 10 cm auf entfettetes, kathodisch tauchlackiertes Karosserieblech gestrichen. Die Gelierung erfolgt durch Erhitzen der beschichteten Bleche während 20 min bei 140 °C. Zur Prüfung der Haftfestigkeit nach der Lagerung in der Salzsprühprüfkammer werden die Filme entgegen der Keilrichtung mit einem Messer eingeschnitten und versucht, von Hand die Beschichtung vom Untergrund abzulösen. Nach einer Lagerung von 14, 25 und 36 Tagen ergibt sich jeweils als Befund ; Nur Probe 3, die die hydrophobe Kieselsäure enthält, läßt sich nicht vom Blech lösen. Die Filme aus den Proben ohne Kieselsäurezusatz lassen sich in 1 cm Breite sauber abschälen. Filme aus den Proben mit hydrophiler Kieselsäure zeigen demgegenüber zwar eine geringfügig schwierigere Abschälbarkeit, sind den Filmen gemäß Probenzusammensetzung 3 in der Haftung am Blechuntergrung aber weit unterlegen.

## Patentansprüche

1. Beschichtungsmassen aus Plastisolen oder Organosolen enthaltend ein Polyaminoamid, dadurch gekennzeichnet, daß sie 0,2-5 Gew.-% einer hydrophoben Kieselsäure enthalten.

2. Verfahren zur Verbesserung der Haftung von Beschichtungsmassen gemäß Oberbegriff von Anspruch 1 auf metallischen Untergründen, dadurch gekennzeichnet, daß man der Beschichtungsmasse vor dem Auftragen 0,2 bis 5 Gew.-%, bezogen auf die Gesamtmenge, einer hydrophoben Kieselsäure zumischt.

3. Verfahren nach Anspruch 2, dadurch gekennzeichnet, daß die metallischen Untergründe grundiert sind.

## Claims

1. Coating compositions based on plastisols or organosols containing a polyaminoamide, characterised in that they contain from 0.2 to 5 % by weight of a hydrophobic silica.

2. A process for improving the adhesion on metallic substrates of coating compositions according to the preamble of claim 1, characterised in that from 0.2 to 5 % by weight, based on the total composition, of a hydrophobic silica are mixed with the coating composition before application.

3. A process according to claim 2, characterised in that the metallic substrates are primed.

## Revendications

1. Masses de revêtement à base de plastisols ou d'organosols contenant un polyamino-amide, caractérisées en ce qu'elles contiennent entre 0,2 et 5 % en poids d'un acide silicique hydrophobe.

2. Procédé pour l'amélioration de l'adhérence de masses de revêtement selon le préambule de la revendication 1, sur des supports métalliques, caractérisé en ce que l'on mélange à la masse de revêtement, avant l'application, 0,2 à 5 % en poids, par rapport à la quantité totale, d'un acide silicique hydrophobe.

3. Procédé selon la revendication 2, caractérisé en ce que les supports métalliques sont texturés.